# EUROPEAN PATENT APPLICATION

(11) **EP 4 806 247 A1**
(43) Date of publication of application: **16.09.2026**
(21) Application number: 24887177.4
(22) Date of filing: 08.11.2024
(51) Int. Cl.: A01C 15/12

(54) **SUBSOILER AND FERTILISER DEVICE**

(30) Priority: 09.11.2023 BR 202023023450 U
(71) Applicant: Brant Carvalho Filho, Felisberto, 04536-001 São Paulo (BR)
(72) Inventor: Brant Carvalho Filho, Felisberto, 04536-001 São Paulo (BR)
(74) Representative: Høiberg P/S
(86) International application number: PCT/BR2024/050512
(87) International publication number: WO 2025/097231

(57) **Abstract**

The present invention comprises a subsoiler shank, provided with a working edge on its leading edge and a detachable wear tip, said shank being associated with a granular fertilizer distributor comprising a fertilizer drop duct, with an opening pointing to a dispersing plate transversely arranged to the movement direction of the subsoiler and tilted at an angle between 30° and 60° with the vertical, said opening and said plate being protected against contact with the soil on sides of the groove by means of side plates forming a gap that accommodates said dispersing plate as well as the lower portion of the drop duct.

## Description

### Technical Field

The proposed invention is related to the field of agricultural implements, more precisely, implements to be used to prepare and sow land, using the no-till planting technique.

### Background art

No-till planting is a sowing technique that aims to reduce the costs involved in cultivation, in which the seed is placed in untilled soil (without prior plowing or light leveling harrowing) using special seeders.

Thus, remnants of the last cultivation remain in and on the soil, such as straw, branches and leaves. In this way, the soil is better protected from moisture loss, resulting in an improvement in amount and quality of soil organic matter (SOM), compared to other management manners.

In no-till farming, the soil is usually highly compacted due to previous cultivation, in addition to being deficient in nutrients. Therefore, implements have been developed that simultaneously perform soil loosening and fertilization thereof.

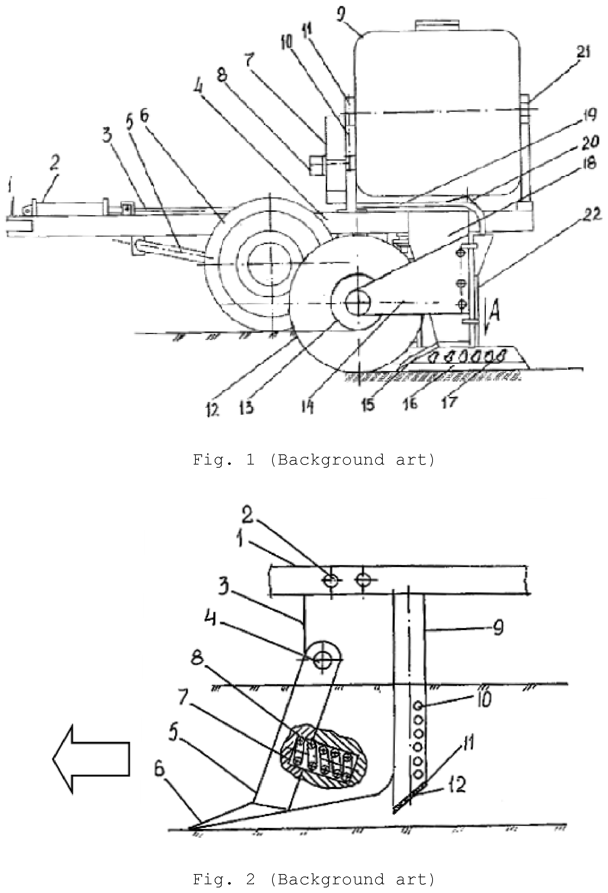

One of these implements is described in patent document RU2687531 C1, entitled MELIORATIVE SUBSURFACE CULTIVATOR FERTILIZER and illustrated in Fig. 1. Such device comprises a disc plow 12 combined with a liquid fertilizer applicator 16, which is distributed in the soil through multiple openings 17.

A drawback of such device is the reduced depth of the groove opened by the disc plow, which rarely exceeds 8cm. Furthermore, the fertilizer is applied at a single depth, next to the bottom of the groove, immediately above the compacted soil, making it subject to leaching and dilution by rainwater and consequent dragging of the fertilizer to the compacted soil region below the bottom of the groove. As a result, the roots do not fully use this fertilizer because it is difficult for the roots to penetrate in the compacted soil.

Patent RU2685180 C1, entitled *WORKING BODY OF AMELIORATIVE CHISEL-DEEP RIPPER-FERTILIZER*, discloses a device, illustrated in Fig. 2, comprising a penetration shank 5, provided with a tip 6, which loosens the soil as it moves in the direction indicated by the arrow. In the back area of such shank, a liquid fertilizer applicator device is provided, comprising a duct 9 provided with a plurality of holes 10, through which said fertilizer is sprayed under pressure.

The aforementioned device has the drawback of being limited to the application of liquid fertilizer. In addition, the holes 9, once exposed, are subject to clogging by soil.

The patent US6425445 B1, entitled *Enhanced Minimum Tillage Planter*/*Renovator System* and illustrated in figures 3-a and 3-b, describes a device for fertilization and planting, comprising two lateral discs and a subsoiling shank that opens a groove in the ground. The same support (designated as 437) is provided with two conductors (440 and 441) for applying seeds and granular fertilizer. The seed applicator duct is provided with a segment (439) with angular adjustment at its lower end.

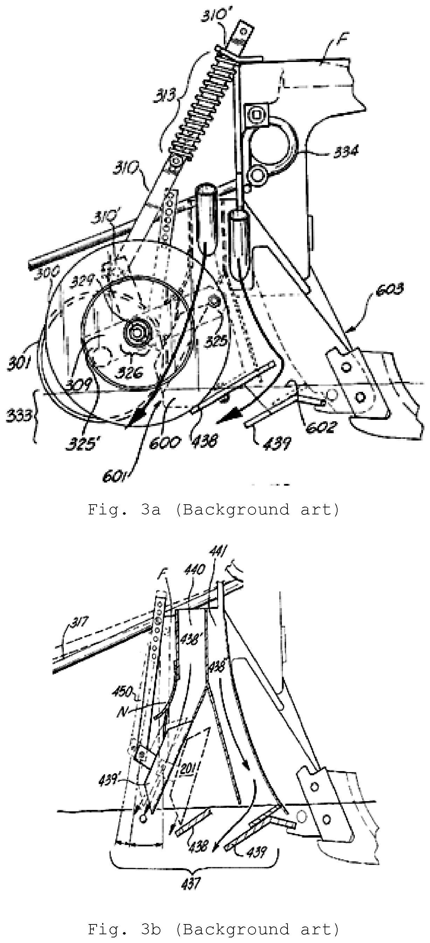

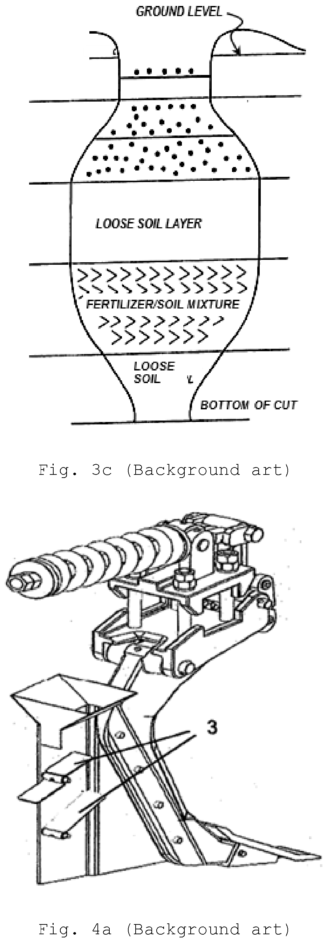

Fig. 3-c shows the groove obtained with said device, where the drawback of fertilizer being applied at only one depth is evident. Furthermore, it is mixed with seeds, which are sown next to the groove's bottom. As a result, once the roots get deeper, they do not find fertilized soil, which negatively affects plant growth.

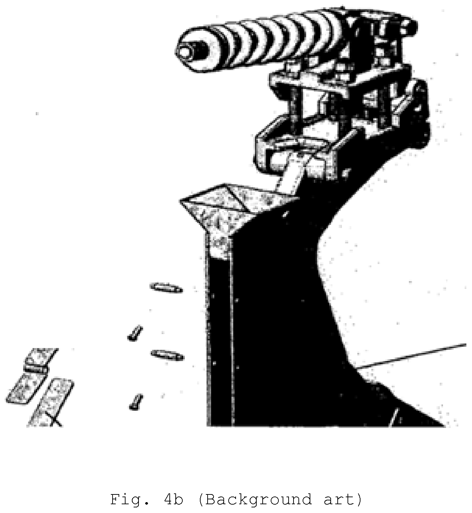

The patent BR202013007758-0 U2, entitled *DISPOSITIVO INJETOR PARA ADUBADEIRA DE PROFUNDIDADE*, describes a system designed to apply soil corrections and fertilizers in deep applications. As shown in figures 4-a and 4-b, the drop tube is provided with adjustable "blades" (3) that allow for differentiated distribution, according to the required distribution profile.

It can be seen in such figures that the dimension of the groove opener, i.e., its lateral thickness, causes the groove to be opened by such device to have an opening beyond necessary to deposit the seed. Such greater width requires greater power from the traction device, resulting in higher fuel consumption and impacting the cost of operation.

Furthermore, the blades (3) are fixed by means of screws and nuts, with ends protruding from the sides of the drop tube, remaining in contact with the soil and, therefore, exposed to soil moisture and subject to corrosion.

### Objectives of the Invention

In view of the above, the present invention has the purpose of providing a subsoiler that provides soil decompaction at depths greater than those obtained with disc plows.

Another objective is to provide means capable of applying granular fertilizers.

Another objective is to provide fertilizing means that distribute fertilizer at different depths in the groove opened by the subsoiler.

Yet another objective is to provide a constructive arrangement that is not subject to clogging and obstruction.

### Brief Description of the Invention

The above objectives, as well as others, are achieved by providing a furrower with constructive arrangement comprising a subsoiler shank provided with a working edge on its leading edge and a detachable tip, said shank being associated with a granular fertilizer distributor installed on the opposite edge to that of the working edge, where said distributor comprises a granular fertilizer drop duct with a lower opening pointing to a dispersing plate transversely arranged to the movement direction of the subsoiler and tilted at an angle between 30° and 60° with the vertical, and where said opening and said plate are protected against contact with the soil on the sides of the groove by means of side plates forming a gap that accommodates said dispersing plate attached by welding, as well as the lower portion of said drop duct, said plates extending beyond the opening thereof in the rear movement direction.

According to another feature of the proposed invention, the dispersing plate is curved in the longitudinal direction, i.e., in the parallel direction to said displacement, in order to widen the angle of the distribution fan of fertilizer granules.

### Description of Drawings

The other features and advantages of the proposed invention will become more evident from the detailed description thereof and the figures attached to it, wherein:
Figure 1 shows a fertilizer subsoiler of background art.
Figure 2 shows another fertilizer subsoiler of background art.
Figures 3-a and 3-b show a fertilizer subsoiler and planter of background art, while Figure 3-c is a cross-sectional view of the groove obtained with such device.
Figures 4-a and 4-b show yet another fertilizer subsoiler of background art.
Figure 5 is an elevation view of the proposed fertilizer subsoiler device.
Figure 6 is a longitudinal sectional view showing the constructiveness of the fertilizer applicator of the proposed device.
Figure 7 is a partial cross-sectional view of an alternative embodiment showing the curved dispersing plate.

### Detailed Description of the Invention

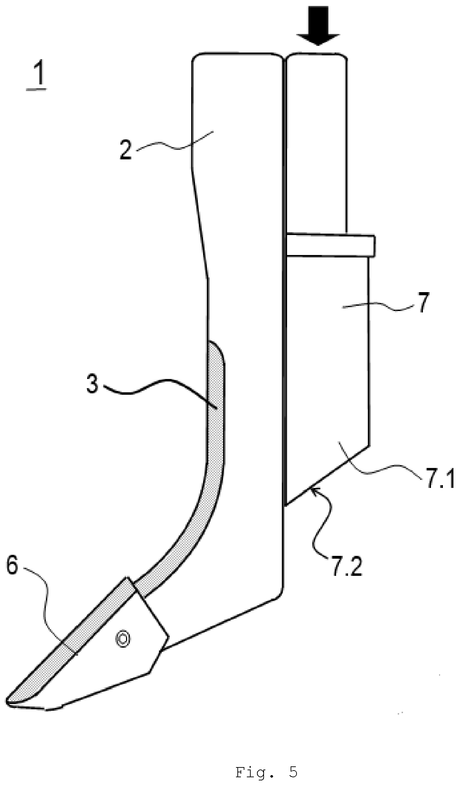

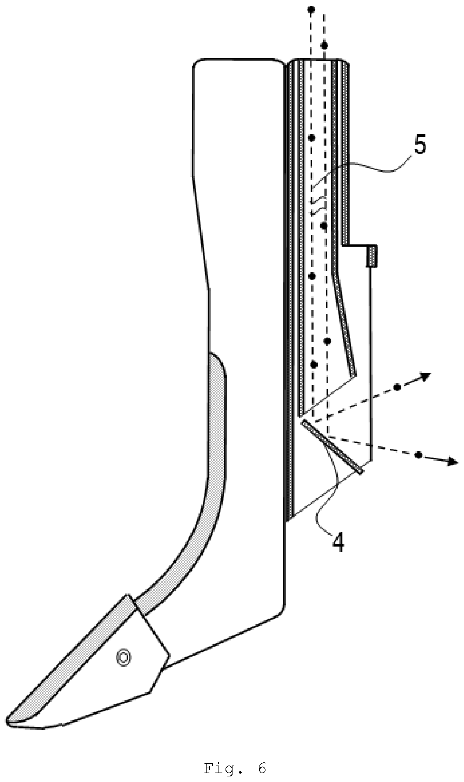

Referring to figures 5 and 6, the proposed invention 1 comprises a shank-shaped body 2, with a working edge 3 on its leading edge, i.e., the one facing in the direction of the subsoiler's advance.

In the lower leading region of said shank 2, a detachable wear tip 6, made of high-strength material, is attached, which can be in contact with stones. Such tip can be replaced when damaged, being retained at shank's end using a screw.

The furrower is fixed to an agricultural implement that is pulled by a tractor, requiring a power of 15hp per furrower, and the agricultural implement is adjusted so that the shank penetrates 20 to 40 cm into the soil. Such greater penetration into the soil provides deeper decompaction, creating better conditions for the longitudinal roots' growth, resulting in a greater capacity for fertilizer absorption, which is dispersed at several depths, allowing for better nutrient absorption, greater resistance to water stress, and a substantial increase in productivity.

As detailed in Fig. 6, the fertilizer distributor comprises two side plates 7.1 and 7.2 fixed to the rear region of the shank 2, in which a drop duct 5 is accommodated between, and the lower opening is pointing towards a dispersing plate 4 transversely arranged between said side plates and tilted between 30° and 60° with the vertical.

As represented in this figure, the fertilizer granules fall onto said plate and are diverted to the groove region located behind the furrower being distributed in a fan pattern at different depths in the soil, in a range between 5cm and 35cm depth (for grooves with 40cm in depth).

In this way, at least 5cm of uncompacted soil without fertilizer will remain in the deepest part of the groove.

Thus, even if leaching occurs, there are at least 5cm of loosened soil in which the plant can still benefit from the fertilizer through root growth, which is not possible when the fertilizer is deposited at the bottom of the groove, since, in such a situation, infiltrated rainwater leaches the fertilizer into the compacted soil.

The fertilizer distribution provided by the proposed invention reduces the negative effects of leaching and allows for the complete or greater use of fertilizer. In this way, the plant has access to fertilizer throughout its growth.

According to what is seen in Figures 5 and 6, the side plates 7.1 and 7.2 extend backward, beyond the opening of fertilizer drop duct 5, in order to prevent its obstruction due to contact with loosen soil.

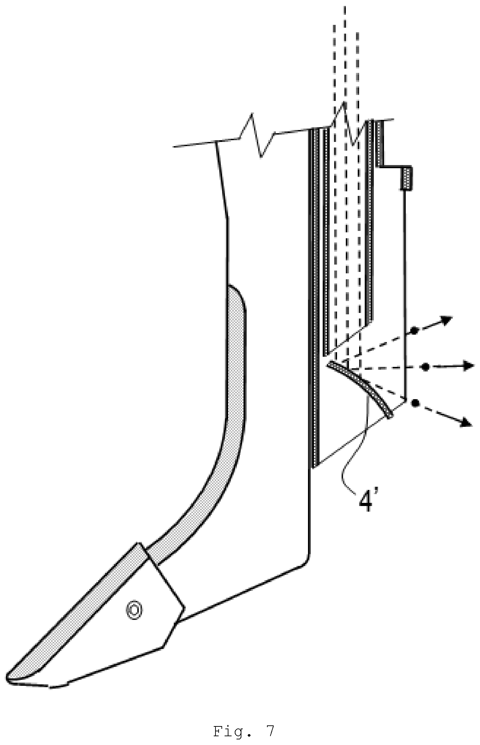

An alternative version of the proposed invention, which does not change the technical-functional and physical unit of the furrower, refers to the provision of a dispersing plate 4', equipped with a convex curvature in the longitudinal direction, that is, parallel to device's displacement, as shown in Fig. 7.

Such curvature in the direction parallel to device's displacement produces an increase in the angle of the distribution fan of the fertilizer granules.

In summary, the use of the invention now proposed provides better fertilizer use, greater plant root growth and better water use, resulting in an increase of productivity up to 30%.

## Claims

1. **SUBSOILER AND FERTILIZER DEVICE** comprising a subsoiler shank (2) provided with a working edge (3) on its leading edge and a detachable wear tip (6), said shank being associated with granular fertilizer distribution means installed on the opposite edge to the working edge, a drop tube (5), a dispersing plate (4) arranged transversely to the movement direction of the subsoiler and side plates (7.1, 7.2), wherein said granular fertilizer drop tube (5) of granular fertilizer with lower opening pointing towards said dispersing plate (4, 4') is tilted at an angle between 30° and 60° with the vertical, and said opening and said plate being protected against contact with the soil on the sides of the groove by means of side plates (7.1, 7.2), forming a gap that accommodates said dispersing plate as well as the lower portion of said drop tube, where the rear edge of said side plates exceeds, in the opposite direction to the subsoiler displacement, the rear edge of said dispersing plate.

2. **SUBSOILER AND FERTILIZER DEVICE** of claim 1, wherein said dispersing plate (4') is convexly curved in parallel direction to displacement of said device.
